(19) Europäisches Patentamt
European Patent Office
Office européen des brevets

(11) Publication number: 0 559 284 A1

# (12) EUROPEAN PATENT APPLICATION

(21) Application number: 93200568.9

(22) Date of filing: 02.03.93

(51) Int. Cl.5: C08L 77/00, C08L 77/06, C08L 23/08, //(C08L77/00, 23:08),(C08L77/06,23:08), (C08L23/08,77:00),(C08L23/08, 77:06)

(30) Priority: 03.03.92 IT MI920466

(43) Date of publication of application: 08.09.93 Bulletin 93/36

(84) Designated Contracting States: AT BE CH DE DK ES FR GB IT LI LU NL SE

(71) Applicant: ECP ENICHEM POLIMERI S.r.l.
16, Piazza della Repubblica
I-20124 Milano(IT)

(72) Inventor: Ciaperoni, Aldemaro
Via Piave 9
I-20021 Bollate (MILAN)(IT)
Inventor: Ghidoni, Dario
Via XXV Aprile 1
I-46023 Gonzaga (MANTOVA)(IT)

(74) Representative: Roggero, Sergio et al
Ing. Barzanò & Zanardo Milano S.p.A. Via Borgonuovo 10
I-20121 Milano (IT)

## (54) Polymeric compositions based on copolyamides.

(57) Polymeric compositions based on copolyamides, having high impact strength, in particular at low temperatures, and high fluidity in the molten state, comprising:

($C_1$) a copolyether amide
($C_2$) an at least partially functionalized olefinic and/or diolefinic polymer, and
($C_3$) possibly, a non-functionalized olefinic and/or diolefinic polymer.

EP 0 559 284 A1

The present invention relates to copolyamide based thermoplastic polymeric compositions.

More particularly, the present invention relates to copolyamide based thermoplastic polymeric compositions having high impact strength ("high impact compositions"), in particular at low temperatures, as well as a high fluidity in the molten state, combined with a low water absorption and low hydrocarbon permeability.

As known, in order to improve the impact strength of polyamides and/or in order to decrease the water absorption thereof, which would negatively influence their properties, according to the prior art said polyamides are blended with olefinic or diolefinic homo- or copolymers which have been at least partially functionalized in order to increase the mutual compatibility of the polymeric components of the blends.

For example, according to German patent Nos. 1,241,606; 1,544,706; 1,138,922; and 1,669,702; and according to U.S. patent No. 3,742,916; the impact strength of moulding compositions based on polyamides can be improved by means of the addition of ethylene copolymers with vinyl acetate or with alpha,beta-unsaturated acids and their derivatives.

According to German patent No. 1,694,802, the compatibility of polyamides with polyethylene can be improved by adding to the blend constituted by both said polymers, an ethylene copolymer with acrylic acid or its derivatives.

Blends of polyamides with a number of grafted polymers and copolymers, such as, e.g., the polymers formed by olefins and/or diolefins with units of acrylic or fumaric acid, or their derivatives, of maleic anhydride or of vinyl esters, are disclosed in German patent Nos. 2,622,973; 2,454,770, and in U.S. patent No. 4,362,846.

Other examples of polyamide based polymeric compositions with functionalized polyolefins, are disclosed in U.S. patent Nos. 3,484,403; 4,174,358; 3,884,882 and 4,346,194; British patent No. 1,403,797; and in European patent application published with Publ. No. 235,876.

The polyamides used in all these compositions are polymers or copolymers constituted by recurrent amidic units -CO-NH-, deriving from the polymerization of lactams and/or from the polycondensation of aminocarboxy acids and/or of amines with dicarboxy acids. More specifically, such polyamides comprise: poly(hexamethylene adipamide) (nylon 6:6), polycaprolactam (nylon 6), polydodecanolactam (nylon 12), polyhexamethylene sebacamide (nylon 6:10), poly(hexamethylene isophthalamide) (nylon 6:iP), poly-(hexamethylene terephthalamide) (nylon 6:T), poly(metaxylyleneadipamide) (nylon MXD-6), and copolymers obtained from such units.

Unfortunately, all such compositions known from the prior art display the disadvantage of an excessive loss of impact strength with decreasing temperatures and a poor fluidity in the molten state, so that they require high processing temperatures.

The Applicant has found now that when the polyamidic component is totally or partially constituted by block copolyether amides as defined in the following, the fluidity and the impact strength, in particular at lower temperatures than 0 °C, of compositions based on an olefinic and/or diolefinic polymer, at least partially functionalized, and a polyamide, can be considerably improved, without affecting the other mechanical, physical and chemical characteristics of the composition.

Therefore, the subject-matter of the present invention is a thermoplastic polymeric composition having low water absorption, high impact strength, in particular at temperatures lower than 0 °C, and high fluidity in the molten state, comprising:

($C_1$) a copolyether amide

($C_2$) an at least partially functionalized olefinic and/or diolefinic polymer, and

($C_3$) possibly, a non-functionalized olefinic and/or diolefinic polymer.

The proportions of components ($C_1$), ($C_2$) and ($C_3$) of the composition according to the present invention are not critical for the purposes of the present invention, provided that the at least partially functionalized olefinic and/or diolefinic polymer is present in an amount of at least 1% by weight relatively to the total composition.

In general, the copolyether amide ($C_1$) is present in an amount which may be comprised within the range of from 10 to 90%, and, correspondingly, the at least partially functionalized olefinic and/or diolefinic polymer ($C_2$) is present in an amount comprised within the range of from 90 to 10% by weight, based on the total weight of both resins. The non-functionalized olefinic and/or diolefinic polymer ($C_3$) may be present in amounts which may range from 0 to 100 parts, based on 100 parts by weight of both resins ($C_1$) and ($C_2$).

A preferred composition according to the present invention comprises:

- 100 parts by weight of a blend constituted by:
  ($C_1$) 25-75% by weight of a copolyether amide, and
  ($C_2$) 75-25% by weight of an at least partially functionalized olefinic and/or diolefinic polymer, and
- 0-50 parts by weight of a non-functionalized olefinic and/or diolefinic polymer ($C_3$).

The block copolyether amides ($C_1$), used in the compositions according to the present invention are well-known products in the art, widely described in technical literature.

They essentially comprise two types of blocks or segments, one of which is a polyamidic block or segment and the other is a polyalkylene ether block or segment, which are covalently bonded and may be distributed randomly or in an ordered way. Said block copolyether amides may have the structure $(A\text{-}B)_n$ or $(A\text{-}B\text{-}A)_n$, in which A is the polyamide block and B is the polyalkylene ether block and n is an integer such that the number average molecular weight is comprised within the range of from 4,300 to 50,000, preferably of from 8,500 to 30,000.

The chemical bonds between the polyamidic blocks (A) and the polyalkylene ether blocks (B) can be of ester type, and hence deriving from the reaction of the end carboxy groups of the polyamidic blocks with the end hydroxy groups of the polyalkylene ether blocks. Such bonds may also be of amidic type, i.e., deriving from the reaction of the end carboxy groups of the polyamidic blocks with the end amino groups of the polyalkylene ether blocks, in the event when such a type of polyalkylene ethers are used.

In the block copolyether amide ($C_1$), the polyamidic blocks (A) have a number average molecular weight comprised within the range of from 2,000 to 20,000, preferably of from 4,000 to 16,000; and the polyalkylene ether blocks (B) have a number average molecular weight comprised within the range of from 160 to 10,000, preferably of from 300 to 4,000.

The amount of polyalkylene ether present in the copolyether amides ($C_1$) is comprised within the range of from 0.5 to 30%, preferably of from 1 to 15% by weight, based on the copolyether amide weight.

The block copolyether amides ($C_1$) can be prepared, for example, by reacting preformed polyamide blocks with polyalkylene ethers containing end hydroxy groups, in the molten state, under blending conditions; or they can be prepared by polymerizing the monomers of polyamides in the presence of a polyalkylene ether containing end hydroxy or amino groups.

Such block copolyether amides and the processes for preparing them are disclosed in French patent No. 1,550,252; British patent Nos. 1,270,097; 1,062,547 and 79-3,451; U.S. patent Nos. 4,346,200; 3,522,324 and 3,044,987; and EPO No. 156,035.

Block copolyether amides ($C_1$) which are particularly preferred in the compositions according to the present invention are those which have the structure $(A\text{-}B\text{-}A)_n$, in which A, B and n have the same meanings as reported above, having a melting temperature comprised within the range of from 215 to 223°C, an apparent viscosity at 230°C comprised within the range of from 50 to 450 Pa.sec, and a number average molecular weight comprised within the range of from 10,000 to 50,000.

The apparent viscosity is measured at 230°C, with a shear rate of 10 $sec^{-1}$ Pas., by using a BRABENDER $^R$ rheometer with a capillary tube having a length of 50 mm and a diameter of 0.5 mm.

Such copolyether amides and the method for preparing them are the subject-matter of italian patent application No. 20,873 A/90, to the same Applicant's name, the content of which makes an integral part of the present invention.

The monomers used in order to prepare the polyamidic blocks (A) are the conventional monomers and comprise the amino monocarboxy acids containing at least 2 carbon atoms between the amino group and the carboxy group, the lactams, or a substantially equimolecular mixture of monomer precursors formed, e.g., by an alkylene diamine, containing at least 2 carbon atom between the amino groups, with an aliphatic dicarboxy acid. An example in this regard is supplied by an equimolecular mixture of hexamethylene diamine with adipic acid, from which the relevant salt is formed in water medium according to well-known methods.

Particularly preferred monomers are the lactams of formula:

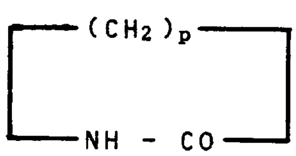

(I)

in which p is an integer comprised within the range of from 2 to 11.

Examples of lactams of formula (I) are beta-propiolactam, gamma-butyrolactam, delta-valerolactam, epsilon-caprolactam, enantholactam, omega-lauryllactam, caprolactam, and so forth.

Epsylon-caprolactam is particularly preferred.

The polymerization of the lactam or of aqueous solutions of salts of alkylene diamine-dicarboxy acid is carried out by heating the reaction mixture to a higher temperature than 200°C, under the autogenous

pressure of 1-15 atm, then gradually decreasing the pressure down to atmospheric pressure, with reaction times of 1.5-3 hours.

The hydroxy groups and/or amino groups containing polyalkylene ethers useable in the preparation of the copolyether amides ($C_1$) are compounds having the general formula:

$$X\text{--}R_1\text{--}(OR_2)_m\text{--}OR_3\text{--}X_1 \quad \text{(II)}$$

in which:

| | |
|---|---|
| $R_1$, $R_2$, $R_3$ | which may be the same or different from each other, are straight or branched-chain saturated divalent aliphatic radicals containing from 1 to 10 carbon atoms; |
| X, and $X_1$ , | which may be the same or different from each other, are -OH or $-NH_2$ groups; |
| m | is an integer such that the molecular weight of the polyalkylene ether block is comprised within the range of from 160 to 10,000. |

Examples of polyalkylene ethers of formula (II) are: poly(ethylene oxy)glycol; poly(1,2-propylene oxide)-glycol; poly(1,3-propylene oxide)glycol; poly(tetra methylene oxide)glycol; poly(penta methylene oxide)-glycol; poly(hexa methylene oxide)glycol; poly(hepta methylene oxide)glycol; poly(octa ethylene oxide)-glycol; poly(mono methyl oxide)glycol; poly(deca methyl oxide)glycol; poly(1,2-butylene oxide)glycol; statistic copolymers or block copolymers of ethylene oxide and 1,2-propylene oxide, and so forth.

Poly(ethylene oxide)glycol and/or poly(tetra methylene oxide)glycol are preferred.

As used in the instant disclosure and in the appended claims, the "block copolyether amide" ($C_1$) also encompasses the blends of copolyether amide with conventional homo- or copolyamides, with the proviso that the content of copolyether amide is of at least 50% by weight. Consequently, suitable blends may be constituted by 99.5-50% by weight of block copolyether amide ($C_1$) and, correspondingly, 0.5-50% by weight of a homo- or co-polyamide. Suitable homo- or copolyamides can be nylon 4, nylon 6, nylon 6:6, nylon 11, nylon 12, nylon 6:10, nylon 6:iP, and so forth.

As this term is used in the instant disclosure and in the examples, as "olefinic and/or diolefinic polymer", all the olefinic and/or diolefinic homopolymers or copolymers are understood which are obtained from straight or branched-chain ethylenically unsaturated monomers containing from 2 to 6 carbon atoms.

Examples of olefinic homo- and copolymers are: high, low and medium density polyethylene, both amorphous and crystalline polypropylene, polybutene, poly-4-methylpentene-1, as well as the copolymers of these monomers with each other and with other olefinic monomers, such as ethylene/propylene, ethylene/butene-1, propylene/butene-1 copolymers and ethylene/propylene/butene-1, ethylene/propylene/4-methylpentene terpolymers; wherein said copolymers and terpolymers may be of block or random types, of plastomeric or elastomeric types.

Examples of olefinic and diolefinic copolymers are the terpolymers of ethylene with another alpha-olefin containing from 3 to 5 carbon atoms and with conjugated or non-conjugated dienes such as, e.g., butadiene, isoprene, 1,4-hexadiene, indene, tetramethylindene and similar copolymerizable dienes.

Examples of such terpolymers are:
ethylene/propylene/butadiene,
ethylene/propylene/indene,
ethylene/propylene/isoprene,
ethylene/propylene/norbornadiene,
and so forth.

The at least partially functionalized olefinic and/or diolefinic polymer ($C_2$) preferably consists of:

- -- 100 parts by weight of an olefinic and/or diolefinic polymer of the above defined type, and
- -- from 0.1 to 50 parts by weight of a mono- or di-unsaturated, copolymerizable monomer containing in its molecule a carboxy, anhydride, ester, amide, imide, hydroxy and/or aminic function.

The amount of copolymerizable mono- or di-unsaturated monomer is more preferably comprised within the range of from 0.5 to 30% by weight, based on the functionalized polymer ($C_2$).

Examples of copolymerizable mono- or di-unsaturated monomers which can be used in order to functionalize the olefinic and/or diolefinic polymer are: acrylic and methacrylic acid and their $C_1$-$C_8$, preferably $C_2$-$C_4$, alkyl esters, such as methyl, ethyl, propyl, n-butyl, tert-butyl (meth)acrylate; 2-ethylhexyl esters of these acids; glycidyl methacrylate; 2-hydroxyethyl acrylate; 2-hydroxyethyl methacrylate; maleic, fumaric, itaconic, citraconic, crotonic acids and their derivatives, such as esters, amides, anhydrides, as diethyl maleate, di-n-butyl maleate, maleic anhydride, dodecenyl-succinic anhydride; allylic, crotylic alcohols; unsaturated amines, such as allyl amines and aminoalkyl acrylates and methacrylates; amides, such as acrylamide and methacrylamide; imides, such as n-phenyl maleimide and 1,4-phenylene-bis methylene-alpha,alpha'-bis maleimide; maleic hydrazide; vinyl acetate, and so forth.

Acrylic acid and maleic anhydride are particularly preferred.

The at least partially functionalized olefinic and/or diolefinic polymer ($C_2$) can be prepared either by direct polymerization of the monomers which constitute it, or by grafting the mono- or di-unsaturated monomer onto the preformed olefinic and/or diolefinic polymer, optionally in the presence of a peroxy catalyst, or by the use of dienic monomers copolymerized inside the chain of the olefinic polymer.

The grafting polymers are well-known to those skilled in the art and are widely described in technical literature.

For exemplifying purposes, we remind U.S. patents 3,236,917; 3,862,265; 3,884,882 and 4,026,967.

Examples of functionalized olefinic and/or diolefinic polymers ($C_2$) which can be used in the compositions of the present invention are: grafted polyethylene-acrylic acid, polyethylene-methacrylic acid, polyethylene-maleic anhydride, polyethylene-vinyl acetate, polypropylene-acrylic acid, polypropylene-maleic anhydride copolymers or polymers, ethylene-propylene copolymers functionalized with maleic anhydride or (meth)acrilic acid.

The production according to the present invention is generally carried out by blending the components ($C_1$), ($C_2$) and ($C_3$) in the above reported proportions.

Any conventional blending methods can be used.

In general, the blending is carried out in the molten state, after a preliminary mixing step at room temperature, on known blending/mixing units, such as single- and twin-screw extruders, Banbury mixer, Henshel mixer, mixing rollers and so forth, at a temperature comprised within the range of from 200 to 300 °C.

The compositions may furthermore contain various additives, such as, e.g., stabilizer agents, plasticizers, lubricants, flame-retardant agents, flow improvers, antistatic agents, nucleating agents, dyes, pigments, fiberglass or other powdered inorganic fillers such as $Al_2O_3$, kaolin, silicates, carbon black, $CaCO_3$ , $SiO_2$, and so forth, in order to confer particular characteristics to the material.

These additives may be added either during or after the preparation of the compositions.

The blends according to the present invention are easily processed and display a balanced property profile which makes them suitable for use in the preparation of articles displaying high toughness, low water absorption and high impact strength, in particular at lower temperatures than 0 °C.

Thanks to these excellent properties, the blends according to the present invention are useful in order to produce various industrial materials and, in particular, they find applications in the sectors of household appliances, electronics, automobile industries and in technical articles of manufacture in general, as films, sheets, strips, tapes, rods, boxes, glasses, low permeability containers and the like. The blends can be used in order to produce foamed articles, by using the known technologies in the art.

In order to better understand the present invention and to practice it, some illustrative, non-limitative examples are reported in the following.

In the examples, all parts and percentages are by weight, unless differently stated.

In the examples, the following components were used:

-- block copolyether amide of $(A\text{-}B\text{-}A)_n$ type, having a melting point of 220 °C and an apparent viscosity of 70 Pa.sec at 230 °C, constituted by 8.5% by weight of poly(oxyethylene)glycol blocks having a molecular weight of 2,000 and 71.5% of polycaprolactam blocks having a molecular weight of 9,410;

-- Polibond 1001$^R$ , a polypropylene brand containing 6% of grafted acrylic acid, manufactured and traded by British Petroleum (U.K).

-- Exxelor VA 1803$^R$ , a rubber-like ethylene-propylene copolymer functionalized with maleic anhydride, constituted by 82% by weight of ethylene, 0.7% by weight of maleic anhydride and 17.3% by weight of propylene, manufactured and traded by EXXON.

-- ACLYN 143$^R$ , an ethylene-acrylic acid copolymer (85:15) manufactured and traded by Allied Corp..

-- Syndiotactic polypropylene "Q30P", manufactured and traded by Himont.

-- High-density polyethylene manufactured and traded by the present Applicant under their trade name ERACLENE.

In the following examples, the following characteristics are measured by the following methods:

Mechanical properties

The elongation at break, the tensile strength and elastic modulus were determined by means of tensile tests performed according to ASTM D638, and notched IZOD resilience values at +23 °C and -30 °C were determined according to ASTM D256 on specimens of 3.2 mm of thickness.

Thermal properties

The VICAT softening points under 1 and 5 kg loads in oil were determined according to ISO 306, with a temperature increase rate of 50 ° C/h.

Rheological properties

Melt Flow Index (M.F.I.) was determined according to ASTM D1238 at 200 ° C and under a 5 kg load; and the apparent viscosity at 230 ° C, at a shear rate of 10 $sec^{-1}$ Pas., was determined by using a BRABENDER R rheometer with a capillary tube having a length of 50 mm and a diameter of 0.5 mm were determined.

EXAMPLE 1

To a twin-screw extruder WERNER ZK 28, 40 parts by weight of Polibond 1001R and 60 parts by weight of polypropylene Q30P and 0.2 parts by weight of phenolic stabilizer IRGANOX 1010R ex CIBA GEIGY were fed.

The temperatures of the several regions of the extruder were kept comprised within the range of from 240 to 260 ° C.

The resulting blend was extruded and the extrudate was dried.

25 parts by weight of the resulting compound were blended inside the same extruder with 75 parts by weight of block copolyether amide ($C_1$), using an extruder temperature comprised within the range of from 220 to 240 ° C in the several extruder regions, and a screw revolution speed of 200 revolutions per minute (rpm).

By cutting the noodles leaving the extruder, pellets were obtained, which were dried.

In order to determine the characteristics, the pellets were injection moulded at a temperature of 205-210 ° C on a moulding press NEGRI & BOSSI V 17-110FA, in order to obtain specimens having the size as required by the standard test procedures.

The properties measured on the resulting specimens are reported in following Table I.

EXAMPLE 2

Inside the same extruder and under the same operating conditions as of Example 1, 96 parts by weight of block copolyether amide and 4 parts by weight of Aclyn 143R were blended and extruded.

30 parts by weight of the resulting dried pellets were mixed with 70 parts by weight of polyethylene.

The temperature values in the several regions of the extruder were kept comprised within the range of from 200 to 230 ° C, and the revolution speed of the screws was kept at 200 revolutions per minute. The blend was moulded under the same conditions as of Example 1.

The measured properties are reported in following Table I.

TABLE I

| MECHANICAL PROPERTIES | UNIT | EXAMPLE 1 | EXAMPLE 2 |
|---|---|---|---|
| - IZOD at +23° C | J/m | 131 | 52 |
| - IZOD at -30° C | J/m | 84 | 51 |
| - Tensile strength | $N/mm^2$ | 44.5 | 31 |
| - Elongation at break | % | 32 | 7 |
| - Elastic modulus | $N/mm^2$ | 1318 | 1295 |
| RHEOLOGICAL PROPERTIES | | | |
| - M.F.I | g/10 min | 45.1 | 54.3 |
| - Apparent viscosity | Pa.sec | 1310 | 963 |

EXAMPLE 3 (Comparison example)

Example 1 was repeated with the block copolyether amide ($C_1$) being replaced with the same amount of nylon 6:6 having a number average molecular weight of 16,000.

The properties of the resulting blend were:

| | |
|---|---|
| - IZOD at -30 °C | 12 J/m |
| - Elastic modulus | 1,437 N/mm$^2$ |
| - M.F.I. | 30.4 g/10 min |
| - Apparent viscosity | 1,789 Pa.sec |

EXAMPLE 4 (Comparison example)

Example 2 was repeated with the block copolyether amide ($C_1$) being replaced with the same amount of nylon 6:6 having a number average molecular weight of 16,000.

The properties of the resulting blend were:

| | |
|---|---|
| - IZOD at -30 °C | 19 J/m |
| - Elastic modulus | 1,321 N/mm$^2$ |
| - M.F.I. | 32.9 g/10 min. |
| - Apparent viscosity | 1,447 Pa.sec. |

EXAMPLES 5-7

By means of a twin-screw extruder Baker-Perkins MPC V30, compositions constituted by polyether amide and Exxelor VA 1803$^R$ were extruded with venting and at the temperature of 240-250 °C.

The ratios of the components of the blend, by weight, are reported in Table II.

By cutting the noodles leaving the extruder, pellets were obtained which were dried for 2-4 hours at 80 °C-90 °C.

For the evaluation of the mechanical and thermal properties, the pellets were injection moulded at the temperature of 205-210 °C on the injection moulding press Negri & Bossi V17 in order to obtain specimens having the size as required by ASTM standards.

The composition of the resulting blends and their properties are reported in following Table II.

TABLE II

| COMPOSITION | UNIT | EX. 5 | EX. 6 | EX. 7 |
|---|---|---|---|---|
| Copolyether amide | | 90 | 80 | 70 |
| Exxelor VA1803 $^R$ | | 10 | 20 | 30 |
| MECHANICAL PROPERTIES | | | | |
| - IZOD at +23°C | J/m | 255 | 920 | 980 |
| - IZOD at -30°C | J/m | 120 | 230 | 1040 |
| - Tensile strength | N/mm$^2$ | 41 | 33 | 25 |
| - Elongation at break | % | 111 | 83 | 54 |
| - Elastic modulus | N/mm$^2$ | 2100 | 1500 | 1210 |
| THERMAL PROPERTIES | | | | |

| | | | | |
|---|---|---|---|---|
| - VICAT at 1 kg | °C | 208 | 206 | 202 |
| - VICAT at 5 kg | °C | 180 | 150 | 100 |
| _RHEOLOGICAL_PROPERTIES_ | | | | |
| - M.F.I | g/10 min. | >100 | >100 | >100 |

## Claims

1. Thermoplastic polymeric composition having high impact strength, in particular at low temperatures, and high fluidity in the molten state, comprising:
   ($C_1$) a copolyether amide
   ($C_2$) an at least partially functionalized olefinic and/or diolefinic polymer, and
   ($C_3$) possibly, a non-functionalized olefinic and/or diolefinic polymer.

2. Thermoplastic polymeric composition according to claim 1, in which the amount of the at least partially functionalized olefinic and/or diolefinic polymer ($C_2$) is of at least 1% by weight, based on the total composition.

3. Thermoplastic polymeric composition according to claim 1 or 2, in which the amount of copolyether amide ($C_1$) is comprised within the range of from 10 to 90% by weight and, correspondingly, the amount of the at least partially functionalized olefinic and/or diolefinic polymer ($C_2$) is comprised within the range of from 90 to 10% by weight; and the amount of the non-functionalized olefinic and/or diolefinic polymer ($C_3$) is comprised within the range of from 0 to 100 parts per weight, based on 100 parts by weight of ($C_1$) + ($C_2$).

4. Thermoplastic polymeric composition according to any of the preceding claims, characterized in that it comprises:
   - 100 parts by weight of a blend constituted by:
     ($C_1$) 25-75% by weight of a copolyether amide, and
     ($C_2$) 75-25% by weight of an at least partially functionalized olefinic and/or diolefinic polymer, and
   - 0-50 parts by weight of a non-functionalized olefinic and/or diolefinic polymer ($C_3$).

5. Thermoplastic polymeric composition according to any of the preceding claims, in which the copolyether amide ($C_1$) has the structure $(A-B)_n$ or $(A-B-A)_n$, in which A is the polyamide block and B is the polyalkylene ether block and n is an integer such that the number average molecular weight is comprised within the range of from 4,300 to 50,000, preferably of from 8,500 to 30,000.

6. Thermoplastic polymeric composition according to claim 5, in which the polyamidic blocks (A) have a number average molecular weight comprised within the range of from 2,000 to 20,000, preferably of from 4,000 to 16,000; and the polyalkylene ether blocks (B) have a number average molecular weight comprised within the range of from 160 to 10,000, preferably of from 300 to 4,000.

7. Thermoplastic polymeric composition according to any of the preceding claims, in which the amount of polyalkylene ether present in the copolyether amide ($C_1$) is comprised within the range of from 0.5 to 30%, preferably of from 1 to 15% by weight, based on the copolyether amide weight.

8. Thermoplastic polymeric compositions according to any of the preceding claims, in which the copolyether amide ($C_1$) has the structure $(A-B-A)_n$, in which A, B and n have the same meanings as defined in claim 5, having a melting temperature comprised within the range of from 215 to 223 °C, an apparent viscosity at 230 °C comprised within the range of from 50 to 450 Pa.sec, and a number average molecular weight comprised within the range of from 10,000 to 50,000.

9. Thermoplastic polymeric composition according to any of the preceding claims, in which the polyamidic block (A) is constituted by poly(epsilon-caprolactam).

**10.** Thermoplastic polymeric composition according to any of the preceding claims, in which the polyalkylene ether block (B) has the general formula:

$X\text{--}R_1\text{--}(OR_2)_m\text{--}OR_3\text{--}X_1$ (II)

in which:

| | |
|---|---|
| $R_1$, $R_2$, $R_3$ | which may be the same or different from each other, are straight or branched-chain saturated divalent radicals containing from 1 to 10 carbon atoms; |
| X, and $X_1$ , | which may be the same or different from each other, are -OH or $-NH_2$ groups; |
| m | is an integer such that the molecular weight of the polyalkylene ether block is comprised within the range of from 160 to 10,000. |

**11.** Thermoplastic polymeric composition according to claim 10, in which the polyalkylene ether block (B) is poly(ethylene oxide)glycol and/or poly(tetra methylene oxide)glycol.

**12.** Thermoplastic polymeric composition according to any of the preceding claims, in which the block copolyether amide ($C_1$) is blended with a conventional homo- or copolyamide, with the proviso that the content of the block copolyether amide ($C_1$) is of at least 50% by weight.

**13.** Thermoplastic polymeric composition according to any of the preceding claims, in which the olefinic and/or diolefinic homo- or copolymers are obtained from straight or branched-chain, ethylenically unsaturated monomers containing from 2 to 6 carbon atoms.

**14.** Thermoplastic polymeric composition according to any of the preceding claims from 1 to 12, in which the olefinic and diolefinic copolymers are ethylene terpolymers with another olefin containing from 3 to 5 carbon atoms and with conjugated or non-conjugated dienes.

**15.** Thermoplastic polymeric composition according to any of the preceding claims, in which the at least partially functionalized olefinic and/or diolefinic polymer ($C_2$) preferably consists of:
-- 100 parts by weight of an olefinic and/or diolefinic polymer of the above defined type, and
-- from 0.1 to 50 parts by weight of a mono- or di-unsaturated, copolymerizable monomer containing in its molecule a carboxy, anhydride, ester, amide, imide, hydroxy and/or aminic function.

**16.** Thermoplastic polymeric composition according to claim 15, in which the amount of mono- or di-unsaturated monomer is comprised within the range of from 0.5 to 30% by weight, based on the at least partially functionalized polymer ($C_2$).

European Patent Office

# EUROPEAN SEARCH REPORT

Application Number

EP 93 20 0568

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH-A- 655 941 (EMS-INVENTA)<br>* Whole document *<br>--- | 1-16 | C 08 L 77/00<br>C 08 L 77/06<br>C 08 L 23/08 //<br>(C 08 L 77/00<br>C 08 L 23:08 )<br>(C 08 L 77/06<br>C 08 L 23:08 )<br>(C 08 L 23/08<br>C 08 L 77:00 )<br>(C 08 L 23/08<br>C 08 L 77:06 ) |
| Y | EP-A-0 251 791 (BICC)<br>* Page 2, line 19 - page 3, line 10 *<br>----- | 1-16 | |
| | | | TECHNICAL FIELDS SEARCHED (Int. Cl.5) |
| | | | C 08 L |

The present search report has been drawn up for all claims

| Place of search | Date of completion of the search | Examiner |
|---|---|---|
| THE HAGUE | 14-06-1993 | LEROY A J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)